# FASCICULE DE BREVET EUROPEEN

(11) **EP 0 741 075 B1**
(45) Date de publication et mention de la délivrance du brevet: **15.12.1999**
(21) Numéro de dépôt: 96400935.1
(22) Date de dépôt: 02.05.1996
(51) Int. Cl.: B64F 1/28

(54) **Installation fixe d'avitaillement en carburant pour aéronefs**
Ortsfeste Kraftstoffbetankungsanlage für Flugzeuge
Stationary fuel supply installation for aircraft

(30) Priorité: 04.05.1995 FR 9505341
(43) Date de publication de la demande: 06.11.1996
(73) Titulaire: ELF ANTAR FRANCE, 92400 Courbevoie (FR)
(72) Inventeur: Magne, Michel, 75017 Paris (FR)
(74) Mandataire: Dubois-Chabert, Guy

(56) Documents cités:
- EP-A- 0 621 175
- FR-A- 2 448 496
- US-A- 3 891 004
- US-A- 4 883 229
- US-A- 4 993 463

## Description

### Domaine technique

L'invention concerne une installation fixe d'avitaillement en carburant pour aéronefs, à partir d'un réseau de distribution de carburant sous pression existant sur l'aéroport.

Une telle installation peut être utilisée sur tout aéroport disposant d'un réseau de distribution de carburant sous pression.

### Etat de la technique

Les techniques d'avitaillement utilisées actuellement sur les aéroports sont de deux types.

Une première technique concerne les aéroports équipés d'un réseau de distribution de carburant sous pression, disposant de prises de pression situées à proximité des aires de stationnement des aéronefs.

Selon cette première technique d'avitaillement, on utilise des petits camions, appelés "oléoserveurs" pour assurer le transfert du carburant sous pression dans les réservoirs des aéronefs. Ces petits camions sont équipés de façon telle qu'ils permettent d'assurer une bonne conservation des propriétés du carburant ainsi qu'un transfert aisé et en parfaite sécurité de celui-ci dans les réservoirs. A cet effet, ils sont habituellement équipés de systèmes de contrôle, de vannes, de flexibles, d'une passerelle élévatrice, etc..

Bien qu'elle soit utilisée couramment sur un grand nombre d'aéroports, cette première technique d'avitaillement présente des inconvénients notables.

Ainsi, les oléoserveurs doivent disposer de sources d'énergie, notamment hydrauliques et pneumatiques, dont la mise en oeuvre nécessite de maintenir en fonctionnement le moteur de l'oléoserveur pendant toute la durée de l'avitaillement. Cela n'est évidemment pas satisfaisant du point de vue de la sécurité.

Par ailleurs, les oléoserveurs constituent des engins complexes qui doivent se déplacer en permanence d'un point à un autre sur les aéroports, ce qui crée un risque potentiel d'accidents soit avec d'autres véhicules de service, soit avec les avions eux-mêmes. Cela n'est évidemment pas satisfaisant ni du point de vue de la sécurité, ni du point de vue de l'écologie.

En outre, la distribution du carburant au moyen de l'oléoserveur est habituellement effectuée par un opérateur unique qui commande toutes les opérations. Cet opérateur doit donc surveiller à la fois l'avion, le camion ainsi que l'intense activité qui règne autour de l'avion lors de l'avitaillement. Lorsque le plein est terminé, l'opérateur ne réagit donc pas au moment opportun et une importante quantité de carburant est susceptible de se déverser sur le sol. Cela n'est évidemment satisfaisant ni financièrement, ni du point de vue écologique.

La deuxième technique d'avitaillement utilisée actuellement, qui est aussi la plus courante, concerne tous les aéroports et notamment ceux qui ne sont pas équipés d'un réseau de distribution de carburant sous pression.

Cette deuxième technique consiste à utiliser des camions citernes, appelés "avitailleurs". Ces camions comprennent des équipements comparables à ceux des oléoserveurs, ainsi qu'une ou plusieurs capacités embarquées sur le véhicule. Ils doivent se déplacer en permanence entre le dépôt aéroportuaire servant au stockage des hydrocarbures, à proximité de l'aérogare, et les aires de stationnement des aéronefs.

Etant donné que leurs équipements sont comparables à ceux des oléoserveurs, les avitailleurs présentent les mêmes inconvénients que ces derniers, aggravés par le fait qu'ils transportent de grandes quantités de carburant (généralement entre 20000 et 80000 litres).

En plus de ces deux techniques d'avitaillement couramment utilisées, on a aussi envisagé, notamment dans le document FR-A-2 417 712, d'assurer directement la liaison entre une prise de pression fixe appartenant à un réseau de distribution de carburant sous pression et les réservoirs de l'aéronef, au moyen d'un flexible que l'on enroule sur une bobine lorsqu'il n'est pas utilisé.

Cette solution particulièrement simple ne présente pas les risques des deux techniques classiques utilisées couramment. Cependant, le trafic intense qui se produit autour des aéronefs sur les aéroports entraîne une usure très rapide des flexibles nécessitant des remplacements très fréquents. De plus, et de façon plus grave, il existe un risque non négligeable pour que le flexible soit arraché par un véhicule, ce qui n'est satisfaisant ni pour la sécurité, ni pour l'écologie.

Enfin, dans le document US-A-4 993 463, on a aussi proposé de raccorder sur une prise de pression fixe d'un réseau de distribution de carburant sous pression une tuyauterie articulée susceptible d'être escamotée dans le sol lorsqu'elle n'est pas utilisée. Le déploiement de cette tuyauterie permet d'effectuer l'avitaillement de l'aéronef.

Du fait de son caractère rigide, la tuyauterie reliant la prise de pression à l'aéronef constitue un obstacle pratiquement infranchissable pour les nombreux véhicules qui cheminent à proximité de l'aire de stationnement des aéronefs, ce qui n'est évidemment pas souhaitable pour la fluidité de cette circulation et constitue un risque majeur d'accident. De plus, le caractère rigide des segments qui constituent la tuyauterie articulée limite l'utilisation de cette technique à certains types d'aéronefs pour lesquels la tuyauterie a été préalablement dimensionnée.

### Exposé de l'invention

L'invention a précisément pour objet une installation fixe permettant d'effectuer l'avitaillement en carburant d'aéronefs de type quelconque, à partir d'un réseau de distribution de carburant sous pression, sans présenter les risques d'accidents inhérents aux techniques connues et sans gêner la circulation des véhicules à proximité des aéronefs.

Conformément à l'invention, ce résultat est obtenu au moyen d'une installation fixe d'avitaillement en carburant pour aéronefs, à partir d'un réseau de distribution de carburant sous pression, caractérisée par le fait qu'elle comprend :
- une base fixe, dressée sur le sol à proximité d'au moins une aire de stationnement d'aéronefs ;
- au moins une structure articulée, dont une première extrémité est supportée de façon pivotante par la base fixe, autour d'un premier axe vertical, de façon à pouvoir se déployer horizontalement, à partir d'un état replié de repos, dans un état déployé d'avitaillement autorisant un passage de véhicules sous ladite structure ;
- un élément moteur, comportant au moins une roue motrice orientable, par lequel la deuxième extrémité de la structure articulée repose sur le sol ;
- une nacelle montée sur la deuxième extrémité de la structure articulée de façon à pouvoir se déplacer entre une position basse de repos et de déplacement et une position haute d'avitaillement ; et
- une tuyauterie montée sur la base fixe et chaque structure articulée, dont une première extrémité est raccordée sur le réseau de distribution et dont la deuxième extrémité, liée à la nacelle, porte au moins un organe de raccordement sur l'aéronef.

Dans une forme de réalisation préférentielle de l'invention, la structure articulée comprend deux tronçons horizontaux rigides, sensiblement d'égale longueur, articulés entre eux par un deuxième axe vertical, à la manière d'un compas. Ces tronçons sont placés à une hauteur qui autorise le passage de véhicules sur le sol. Dans ce cas, l'extrémité d'un premier des tronçons opposée au deuxième axe vertical forme la première extrémité de la structure articulée, alors que l'extrémité du deuxième tronçon opposée au deuxième axe vertical est prolongée vers le bas par un châssis qui forme la deuxième extrémité de la structure articulée. Ce châssis repose sur le sol par la roue motrice orientable autour d'un troisième axe vertical.

Avantageusement, dans l'état replié de repos de la structure articulée, les deux tronçons sont placés à l'opposé de l'aire de stationnement desservie par cette structure, par rapport à la base fixe. Cette caractéristique permet notamment de présenter la nacelle dans la meilleure orientation possible par rapport au bord d'attaque de la voilure des aéronefs, sans risquer de heurter les moteurs.

Dans la forme de réalisation préférentielle de l'invention, la tuyauterie comprend trois tronçons de tuyauterie rigides cheminant respectivement dans la base fixe et dans chacun des tronçons de la structure articulée. La tuyauterie comprend en outre deux raccords rotatifs reliant bout à bout ces tronçons de tuyauterie. Ces raccords rotatifs définissent deux axes verticaux qui sont respectivement confondus avec le premier et le deuxième axe verticaux définis précédemment.

En outre, la tuyauterie comprend de plus un tronçon de tuyauterie flexible reliant les tronçons de tuyauterie rigides à au moins un appendice flexible porté par la nacelle et terminé par l'organe de raccordement.

De préférence, deux structures articulées sont montées sur la même base.

Selon le cas, la base fixe peut être constituée soit par un poteau érigé entre deux aires de stationnement d'aéronefs, soit par un pilier sur lequel est également articulée une passerelle assurant le transfert des passagers, soit enfin par une extension de l'aérogare.

L'élément moteur comprend avantageusement deux roues montées sur un essieu commun et des moteurs indépendants associés à chacune des roues. Des moyens de commande de ces moteurs sont alors montés sur la nacelle.

L'opérateur qui pilote l'installation est avantageusement embarqué sur la nacelle qui supporte alors au moins une vanne d'ajustage montée sur la tuyauterie pour la distribution du carburant, au moins une commande d'arrêt d'urgence de cette distribution, un indicateur du volume de carburant délivré et au moins une alarme.

Enfin, le raccordement de la première extrémité de la tuyauterie sur le réseau de distribution s'effectue dans un caisson placé sur le sol, à proximité immédiate de la base fixe. Ce caisson contient des moyens de contrôle, de régulation et de mesure de l'alimentation en carburant.

### Brève description des dessins

On décrira à présent, à titre d'exemple non limitatif, une forme de réalisation préférentielle de l'invention, en se référant aux dessins annexés, dans lesquels :
- la figure 1 est une vue de côté représentant schématiquement une installation d'avitaillement conforme à l'invention, dans la position qu'elle occupe lors de l'avitaillement d'un avion, la passerelle de transfert des passagers étant illustrée schématiquement en traits mixtes ;
- la figure 2 est une vue de dessus représentant schématiquement l'avitaillement simultané de deux avions à partir d'une même installation conforme à l'invention ; et
- la figure 3 est un schéma cinématique illustrant plus en détail les différents éléments constitutifs de l'installation d'avitaillement selon l'invention.

### Exposé détaillé d'un mode de réalisation.

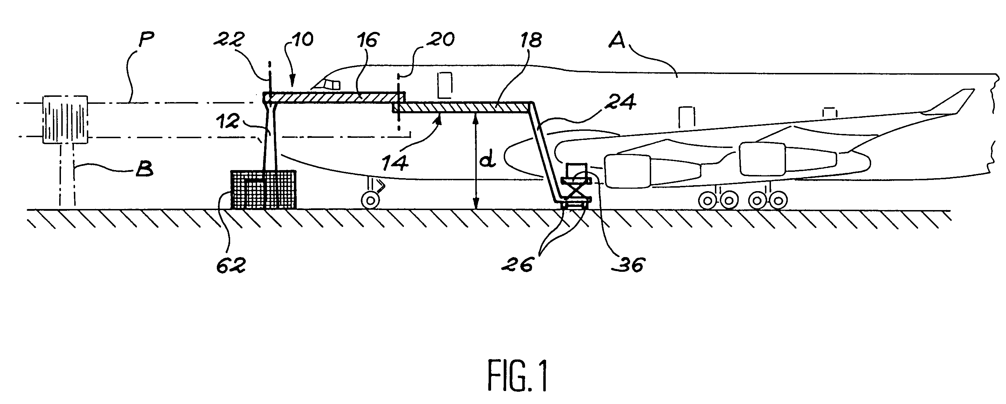

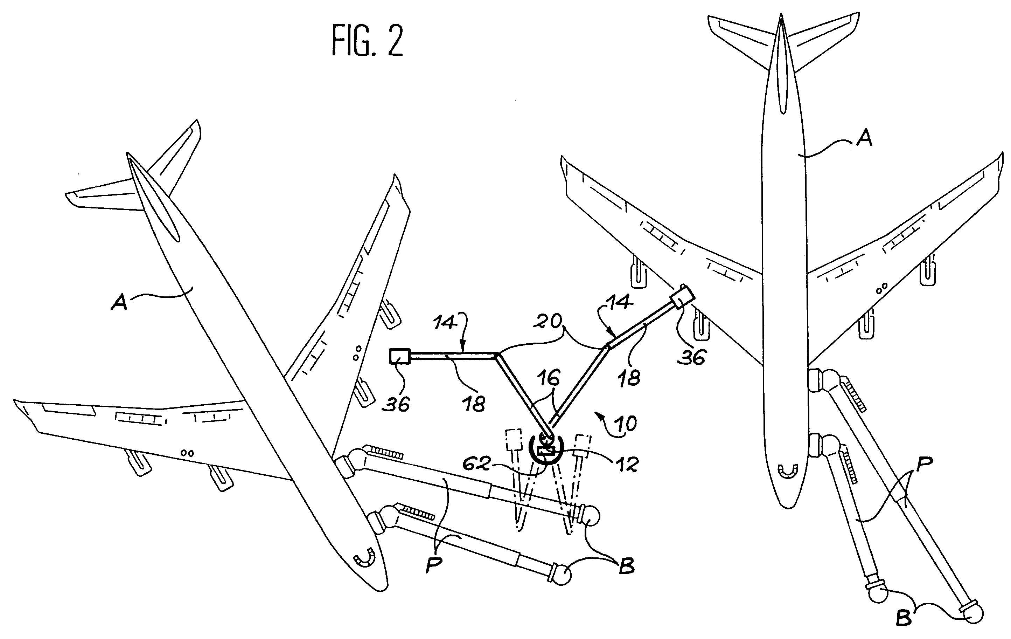

Sur les figures 1 et 2, la référence 10 désigne de façon générale une installation fixe d'avitaillement en carburant, installée sur un aéroport à proximité de deux aires de stationnement. Chacune de ces aires de stationnement peut recevoir un aéronef A de type quelconque.

L'installation fixe d'avitaillement 10 est prévue pour être installée sur un aéroport équipé d'un réseau (non représenté) de distribution de carburant sous pression. Un tel réseau, qui ne fait pas partie de l'invention, permet d'acheminer le carburant nécessaire à l'avitaillement des aéronefs à proximité de leurs aires de stationnement. Il comprend des canalisations souterraines équipées de prises de pression situées à proximité des aires de stationnement précitées. L'installation fixe d'avitaillement 10 se raccorde sur l'une de ces prises de pression.

On a aussi représenté schématiquement sur les figures 1 et 2 des passerelles P permettant aux passagers de circuler entre les aéronefs A et l'aérogare (non représenté). Ces passerelles P, qui sont réalisées de façon classique, sont généralement télescopiques et articulées, du côté de l'aérogare, sur un pilier B reposant sur le sol.

L'installation fixe d'avitaillement 10 conforme à l'invention est conçue pour permettre d'effectuer simultanément l'alimentation en carburant du ou des avions placés sur les deux aires de stationnement voisines. Il est à noter qu'en variante, une installation comparable pourrait être placée à proximité d'une aire de stationnement unique, afin de permettre l'alimentation en carburant d'un seul aéronef.

L'installation 10 comprend principalement une partie mécanique et une partie hydraulique qui vont être à présent décrites successivement, en se référant aux figures 1 à 3.

La partie mécanique de l'installation fixe d'avitaillement 10 comprend tout d'abord une base fixe 12, dressée sur le sol à proximité immédiate de la prise de pression la plus proche des deux aires de stationnement précitées. Dans la forme de réalisation représentée, la base fixe 12 est constituée par un poteau érigé directement entre les deux aires de stationnement des avions A à proximité immédiate de la prise de pression.

Dans une variante de réalisation non représentée, la base fixe 12 est constituée directement par le pilier B d'articulation de la passerelle P la plus proche de la prise de pression considérée.

Dans une autre variante de réalisation non représentée, la base fixe 12 peut aussi être constituée par une extension de l'aérogare.

Dans la forme de réalisation représentée, la partie mécanique de l'installation 10 comprend de plus deux structures articulées 14 (figure 2) permettant respectivement de desservir les réservoirs des aéronefs A qui sont situés dans les demi-voilures de ces aéronefs les plus proches de la base fixe 12. Dans le cas où l'installation est destinée à l'avitaillement d'un seul aéronef, elle ne comprend bien entendu qu'une seule structure articulée 14. Une première extrémité de chaque structure articulée 14 est supporté de façon pivotante, par un premier axe vertical 22, en haut de la base fixe 12.

Etant donné que les structures articulées 14 et les éléments qui leurs sont associés sont réalisés de façon totalement identique, seule l'une de ces structures et ses éléments associés vont à présent être décrits.

Dans sa forme de réalisation préférentielle représentée sur les figures 1 à 3, chaque structure articulée 14 comprend deux tronçons rigides et sensiblement rectilignes 16 et 18, disposés horizontalement à une distance d au-dessus du sol (figure 1). Cette distance d est suffisante pour permettre le passage des véhicules de piste en dessous de la structure articulée 14, notamment lorsque cette dernière est déployée comme l'illustrent les figures.

De façon plus précise, les tronçons 16 et 18 de la structure articulée 14 sont sensiblement d'égale longueur. Ces deux tronçons 16 et 18 sont articulés entre eux par un deuxième axe vertical 20, de telle sorte que la structure articulée 14 se déforme horizontalement à la manière d'un compas.

La première extrémité de la structure articulée 14, qui est articulée au sommet de la base fixe 12 par le premier axe vertical 22 est formée par l'extrémité du tronçon 16 opposée au deuxième axe vertical 20. Du fait de cet agencement, la structure articulée 14 peut occuper un état replié de repos, illustré en traits mixtes sur la figure 2, et un état déployé d'avitaillement, illustré en trait plein sur les figures 1 et 2.

Dans l'état replié de repos les deux tronçons 16 et 18 de la structure articulée 14 sont repliés l'un contre l'autre, à l'opposé de l'aire de stationnement desservie par rapport à la base fixe 12, par pivotement autour des premier et deuxième axes verticaux 22 et 20. L'extrémité de la structure articulée 14 opposée à celle par laquelle cette structure est articulée sur la base fixe 12 se trouve alors à proximité immédiate de cette dernière. Dans ces conditions, l'installation occupe un encombrement minimal qui n'entraîne pratiquement aucune gène pour la circulation des véhicules de piste, d'autant plus que la structure articulée 14 se trouve alors toujours à la hauteur d au-dessus du sol.

Pour éviter tout risque d'interférence entre la structure articulée 14 lorsqu'elle est repliée et les passerelles, on donnera autant que possible à la distance d une valeur légèrement supérieure à la hauteur maximale de chacune des passerelles P. Cependant, il est à noter que toute interférence est normalement rendue impossible par le fait que les passerelles sont elles-mêmes normalement repliées.

Par ailleurs, dans l'état déployé d'avitaillement de la structure articulée 14, celle-ci forme un pont dont le dimensionnement autorise le passage des véhicules de piste. Cette caractéristique est illustrée sur la figure 1.

Il est à noter que les dimensions des deux tronçons 16, 18 de la structure articulée 14 doivent être déterminées afin que, quel que soit le type d'avion A stationné sur l'aire de stationnement desservie par cette structure, les tronçons 16, 18 ne soient jamais alignés en vue de dessus (figure 2). Cette condition peut notamment être assurée en prévoyant, sur l'articulation qui relie les tronçons 16, 18, une butée de fin de course limitant l'angle d'ouverture à une valeur inférieure à 180°.

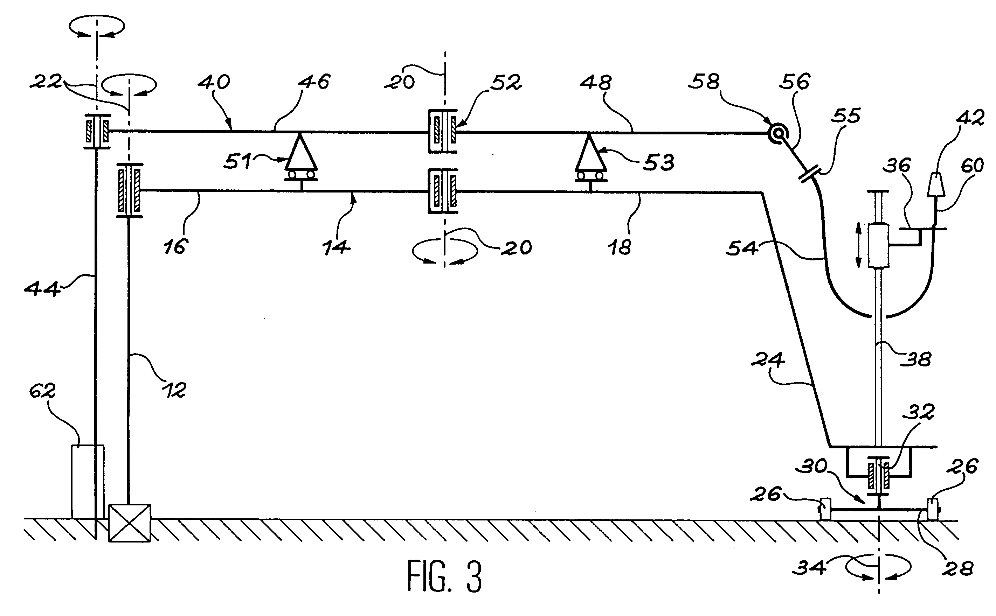

Comme l'illustre schématiquement la figure 1, le deuxième tronçon 18 de la structure articulée 14 est prolongé vers le bas par un châssis rigide 24 qui peut être soit fixé à l'extrémité libre du deuxième tronçon 18, soit réalisé d'un seul tenant avec ce tronçon. Ce châssis 24 comporte une partie orientée verticalement ou légèrement inclinée comme l'illustre la figure 1, ainsi qu'une partie basse sensiblement horizontale. Cette partie basse du châssis 24 repose sur le sol par deux roues motrices orientables 26 portées par un même essieu 28, comme l'illustre la figure 3.

L'essieu 28 ainsi que les roues motrices 26 qu'il supporte appartiennent à un élément moteur 30 monté sur la partie basse horizontale du châssis 24. Cet élément moteur 30 comprend en outre une colonne verticale 32 solidaire de l'essieu 28 et par laquelle l'élément moteur est monté pivotant sur la partie basse horizontale du châssis 24, autour d'un troisième axe vertical 34.

L'élément moteur 30 comprend en outre deux moteurs (non représentés) associés respectivement à chacune des roues motrices 26 et dont la commande est effectuée séparément. Cet agencement permet un déplacement de la partie basse horizontale du châssis 24, formant l'extrémité de la structure articulée 14, selon une trajectoire quelconque permettant à l'opérateur d'assurer à volonté le déploiement et le repli de la structure articulée dans des conditions satisfaisantes.

Il est à noter que l'élément moteur 30 pourrait être réalisé de manière différente, sans sortir du cadre de l'invention. Ainsi, l'ensemble formé par les deux roues motrices 26 et par l'essieu 28 qui les supporte peut être remplacé par deux roues jumelées.

Le châssis 24 supporte, par exemple par sa partie basse horizontale comme l'illustre la figure 3, une nacelle 36 apte à se déplacer selon une direction verticale ou sensiblement verticale entre une position basse et une position haute.

La nacelle 36 occupe normalement sa position basse lorsque la structure articulée 14 est repliée et lorsque cette structure est en mouvement. Elle occupe au contraire sa position haute lors de l'avitaillement d'un aéronef.

La commande et le guidage du déplacement de la nacelle 36 entre sa position haute et sa position basse peuvent être réalisés par tout moyen approprié. Ainsi et uniquement à titre d'exemple, la nacelle 36 peut être montée sur des guides verticaux 38 portés par la partie basse horizontale du châssis 24 et sur lesquels coulisse la nacelle 36 comme l'illustre schématiquement la figure 3. La commande du déplacement est alors assurée, par exemple, par un pignon monté sur l'arbre de sortie d'un moteur (non représenté) embarqué sur la nacelle, ce pignon étant engrené sur une crémaillère portée par l'un des guides 38.

En variante, le guidage de la nacelle 36 entre ses positions haute et basse peut être effectué en montant directement la nacelle sur la partie de liaison du châssis 24 qui relie le deuxième tronçon 18 de la structure articulée 14 à la partie basse horizontale du châssis. Les guides verticaux 38 sont alors supprimés.

La nacelle 36 est avantageusement équipée de façon à permettre à un opérateur unique d'assurer la mise en oeuvre de l'installation d'avitaillement 10 depuis cette nacelle. A cet effet, on trouve notamment sur la nacelle 36 des moyens de commande (non représentés) des moteurs qui assurent l'entraînement des roues motrices 26. Ces moyens de commande peuvent notamment se présenter sous la forme d'une manette montée sur un pupitre et dont l'actionnement permet de commander simultanément, à des vitesses réglables séparément, l'entraînement en rotation de chacune des roues 26, de façon à assurer le déploiement ou le repli de la structure articulée 14 selon une trajectoire contrôlée.

La nacelle 36 supporte également un certain nombre d'équipements qui seront décrits par la suite, grâce auxquels l'opérateur peut assurer le raccordement de l'installation sur les orifices de remplissage des réservoirs de l'avion, puis assurer la commande et le contrôle du remplissage.

En plus de la partie mécanique qui vient d'être décrite, l'installation fixe d'avitaillement selon l'invention comporte une partie hydraulique permettant d'effectuer le raccordement du réseau de distribution de carburant sous pression sur un ou plusieurs réservoirs de l'avion, puis de commander et de contrôler l'avitaillement en carburant.

Cette partie hydraulique comprend principalement une tuyauterie 40 associée à chacune des structures articulées 14. Plus précisément, chacune des tuyauteries 40 est montée sur la base fixe 12 et sur la structure articulée 14, de telle sorte qu'une première extrémité de cette tuyauterie soit raccordée sur la prise de pression du réseau de distribution de carburant sous pression et que sa deuxième extrémité soit lié à la nacelle 36. En outre, cette deuxième extrémité de la tuyauterie 40 est munie d'un organe de raccordement 42, généralement appelé "accrocheur", permettant son raccordement sur l'orifice de remplissage en carburant d'un réservoir de l'avion considéré. De préférence, la deuxième extrémité de la tuyauterie 40 porte deux accrocheurs 42, grâce auxquels deux réservoirs de l'avion peuvent être remplis simultanément.

Comme on l'a représenté schématiquement sur la figure 3, la tuyauterie 40 comporte un premier tronçon de tuyauterie rigide 44, qui chemine verticalement dans la base fixe 12, un deuxième tronçon de tuyauterie rigide 46, qui chemine horizontalement dans le premier tronçon 16 de la structure articulée 14 et un troisième tronçon de tuyauterie rigide 48, qui chemine horizontalement dans le deuxième tronçon 18 de la structure articulée 14. Le raccordement du deuxième tronçon de tuyauterie rigide 46 sur le premier tronçon de tuyauterie rigide 44 est assuré par un raccord rotatif 50 dont l'axe de pivotement vertical est confondu avec l'axe 22, contrairement à ce qu'illustre schématiquement la figure 2, pour faciliter la compréhension. De façon comparable, le troisième tronçon de tuyauterie rigide 48 est articulé sur le deuxième tronçon de tuyauterie rigide 46 par un raccord rotatif 52 dont l'axe d'articulation est confondu avec l'axe d'articulation 20 du deuxième tronçon 18 de la structure articulée 14 sur le premier tronçon 16.

Grâce à l'agencement qui vient d'être décrit, les déformations subies par la structure articulée 14 lors de son déploiement ou de son repli n'engendrent aucune contrainte sur les tuyauteries 40. Par conséquent, tout risque de fuite engendrée par ces déformations est évité.

Comme on l'a illustré schématiquement en 51 et 53 sur la figure 3, les tronçons de tuyauterie rigides 46 et 48 reposent respectivement sur les tronçons 16 et 18 de la structure articulée 14 par des dispositifs tels que des plots en caoutchouc ou des guides montés sur des roulements à billes.

Au-delà du troisième tronçon de tuyauterie rigide, la tuyauterie 40 se prolonge par un tronçon de tuyauterie flexible 54. Une première extrémité de ce tronçon de tuyauterie flexible 54 est fixée par une bride 55 soit directement à l'extrémité du troisième tronçon de tuyauterie rigide 48, soit sur un tronçon rigide intermédiaire 56 de faible longueur, lui-même raccordé sur l'extrémité du tronçon 48 par un raccord rotatif 58 d'axe horizontal, comme l'illustre la figure 3. L'autre extrémité du tronçon de tuyauterie flexible 54 est fixée à la nacelle 36 et reliée à l'accrocheur 42 par un appendice flexible 60. Dans le cas préférentiel évoqué précédemment où la nacelle comporte deux accrocheurs 42, l'extrémité du tronçon de tuyauterie flexible 54 fixée à la nacelle 36 est prolongée par un tronçon de tuyauterie en Y dont les deux branches sont elles-mêmes prolongées par deux appendices flexibles analogues à l'appendice 60, chacun de ces appendices flexibles étant terminé par un accrocheur 42. Afin que l'opérateur puisse contrôler la distribution du carburant, chacun des appendices flexibles 60 est équipé d'une vanne d'ajustage (non représentée).

Le raccordement de la première extrémité de la tuyauterie 40 sur la prise de pression du réseau de distribution de carburant sous pression s'effectue par l'intermédiaire d'un ensemble d'équipements, appelé "fardeau", logé dans un caisson 62 qui repose sur le sol, à proximité immédiate de la base fixe 12. Le caisson 62 est placé sur la prise de pression du réseau et il contient notamment des moyens de contrôle, de régulation et de mesure de l'alimentation en carburant. A titre d'exemple, ces moyens peuvent notamment comprendre un dispositif de régulation avec compensation des pertes de charge, des moyens de filtration, des moyens de comptage tels qu'un compteur à turbine, des manomètres et autres indicateurs, des prises d'échantillons et de contrôle en ligne, ainsi que des vannes de contrôle et d'isolement.

Du fait que la commande et le contrôle de l'avitaillement sont réalisés depuis la nacelle 36, un certain nombre des équipements du fardeau sont reliés à cette dernière par des câbles électriques cheminant entre le caisson 62 et la nacelle 36, avec la tuyauterie 40. Cet agencement permet d'implanter sur la nacelle 36 des commandes d'arrêt d'urgence de la distribution, ainsi qu'un indicateur du volume de carburant délivré et au moins une alarme sonore et/ou visuelle.

Comme l'illustrent schématiquement les différentes figures, l'installation qui vient d'être décrite peut être implantée sur tout aéroport équipé d'un réseau de distribution de carburant. Elle permet d'assurer l'avitaillement d'au moins un avion et, de préférence, de deux avions placés sur des aires de stationnement voisines. Il est important d'observer que la mobilité verticale de la nacelle 36 ainsi que la forme donnée à la structure articulée 14 permettent d'assurer l'avitaillement en carburant d'aéronefs de types quelconques avec la même installation. De plus, cet avitaillement est réalisé sans risque et sans entraver le trafic des véhicules de piste qui cheminent habituellement autour des avions. En outre, cet avitaillement peut être assuré à l'aide d'un opérateur unique et en utilisant l'énergie disponible sur une ou plusieurs des passerelles situées à proximité de l'installation, ce qui en simplifie grandement la réalisation et augmente là encore la sécurité.

## Revendications

1. Installation fixe d'avitaillement en carburant pour aéronefs, à partir d'un réseau de distribution de carburant sous pression, caractérisée par le fait qu'elle comprend :
- une base fixe (12), dressée sur le sol à proximité d'au moins une aire de stationnement d'aéronefs ;
- au moins une structure articulée (14), dont une première extrémité est supportée de façon pivotante par la base fixe (12), autour d'un premier axe vertical (22), de façon à pouvoir se déployer horizontalement, à partir d'un état replié de repos, dans un état déployé d'avitaillement autorisant un passage de véhicules sous ladite structure ;
- un élément moteur (30), comportant au moins une roue motrice orientable (26), par lequel la deuxième extrémité de la structure articulée (14) repose sur le sol ;
- une nacelle (36) montée sur la deuxième extrémité de la structure articulée (14) de façon à pouvoir se déplacer entre une position basse de repos et de déplacement et une position haute d'avitaillement ; et
- une tuyauterie (40) montée sur la base fixe (12) et chaque structure articulée (14), dont une première extrémité est raccordée sur le réseau de distribution et dont la deuxième extrémité, liée à la nacelle (36), porte au moins un organe de raccordement (42) sur l'aéronef.

2. Installation selon la revendication 1, caractérisée par le fait que la structure articulée (14) comprend deux tronçons horizontaux rigides (16,18), sensiblement d'égales longueurs, articulés entre eux par un deuxième axe vertical (20), à la manière d'un compas, ces tronçons étant placés à une hauteur autorisant le passage de véhicules sur le sol.

3. Installation selon la revendication 2, caractérisée par le fait que l'extrémité d'un premier (16) des tronçons opposée au deuxième axe vertical (20) forme la première extrémité de la structure, alors que l'extrémité du deuxième tronçon (18) opposée au deuxième axe vertical (20) est prolongée vers le bas par un châssis (24) formant la deuxième extrémité de la structure, ce châssis reposant sur le sol par la roue motrice orientable (26) autour d'un troisième axe vertical (34).

4. Installation selon l'une quelconque des revendications 2 et 3, caractérisée par le fait que, dans l'état replié de repos de la structure articulée (14), les deux tronçons (16,18) sont placés à l'opposé de l'aire de stationnement desservie par cette structure, par rapport à la base fixe (12).

5. Installation selon l'une quelconque des revendications 2 à 4, caractérisée par le fait que la tuyauterie (40) comprend trois tronçons de tuyauterie rigides (44,46,48) cheminant respectivement dans la base fixe (12) et dans chacun des tronçons (16,18) de la structure articulée et deux raccords rotatifs (50, 52) reliant bout à bout ces tronçons de tuyauterie, ces raccords rotatifs définissant deux axes verticaux (22, 20) respectivement confondus avec le premier et le deuxième axe verticaux.

6. Installation selon la revendication 5, caractérisée par le fait que la tuyauterie (40) comprend de plus un tronçon de tuyauterie flexible (54) reliant les tronçons de tuyauterie rigides (44,46,48) à au moins un appendice flexible (60) porté par la nacelle (36) et terminé par l'organe de raccordement (42).

7. Installation selon l'une quelconque des revendications précédentes, caractérisée par le fait qu'elle comprend deux structures articulées (14) montées sur la même base (12).

8. Installation selon l'une quelconque des revendications précédentes, caractérisée par le fait que la base fixe (12) est un poteau érigé entre deux aires de stationnement d'aéronefs.

9. Installation selon l'une quelconque des revendications 1 à 7, caractérisée par le fait que la base fixe (12) est un pilier sur lequel est également articulée une passerelle-passagers.

10. Installation selon l'une quelconque des revendications 1 à 7, caractérisée par le fait que la base fixe (10) est une extension de l'aérogare.

11. Installation selon l'une quelconque des revendications précédentes, caractérisée par le fait que l'élément moteur comprend deux roues (26) montées sur un essieu commun (28) et des moteurs indépendants associés à chacune des roues, des moyens de commande de ces moteurs étant montés sur la nacelle (36).

12. Installation selon l'une quelconque des revendications précédentes, caractérisée par le fait que la nacelle (36) supporte au moins une vanne d'ajustage montée sur la tuyauterie (40) pour la distribution du carburant, au moins une commande d'arrêt d'urgence de cette distribution, un indicateur du volume de carburant délivré, et au moins une alarme.

13. Installation selon l'une quelconque des revendications précédentes, caractérisée par le fait que le raccordement de la première extrémité de la tuyauterie (40) sur le réseau de distribution s'effectue dans un caisson (62) placé sur le sol, à proximité immédiate de la base fixe, et contenant des moyens de contrôle, de régulation et de mesure de l'alimentation en carburant.

## Claims

1. Fixed installation for fuelling aircraft from an under-pressure fuel distribution system, characterized in that it comprises:
- a fixed base (12) erected on the ground close to at least one aircraft parking area;
- at least one articulated structure (14), one of its extremities being supported in a pivoting way by the fixed base (12), around a first vertical pin (22) so as to be able to be deployed horizontally from a folded idle position into a deployed fuelling state authorizing a passage of vehicles under said structure;
- a driving element (30) comprising at least one orientable driving wheel (26) by which the second extremity of the articulated structure (14) rests on the ground;
- a pod (36) mounted on the second extremity of the articulated structure (14) so as to be able to move between a lower idle and displacement position to an upper fuelling position, and
- a pipe (40) mounted on the fixed base (12) and each articulated structure (14) and whose first extremity is connected to the distribution system and whose second extremity linked to the pod (36) bears at least one member (42) for connection to the aircraft.

2. Installation according to claim 1, characterized in that the articulated structure (14) includes two rigid horizontal sections (16, 18) of approximately equal length and joined together by a second vertical pin (20) in the way of a compass, these sections being placed at a height authorizing the passage of vehicles on the ground.

3. Installation according to claim 2, characterized in that the extremity of one of the sections (16) opposite the second vertical pin (20) forms the first extremity of the structure, whereas the extremity of the second section (18) opposite the second vertical pin (20) is extended downwards by a frame (24) forming the second extremity of the structure, this frame resting on the ground via the orientable driving wheel (26) around a third vertical pin (34).

4. Installation according to claim 2 or 3, characterized in that in the folded back idle position of the articulated structure (14), the two sections (16, 18) are placed opposite the parking area served by this structure with respect to the fixed base (12).

5. Installation according to any one of claims 2 to 4, characterized in that the pipe (40) includes three rigid pipe sections (44, 46, 48) respectively being routed into the fixed base (12) and into each of the sections (16, 18) of the articulated structure, and two rotary connectors (50, 52) connecting end-to-end these pipe sections, these rotary connectors defining two vertical pins (22, 20) respectively merged with the first and second vertical pins.

6. Installation according to claim 5, characterized in that the pipe (40) further includes a flexible pipe section (54) connecting the rigid pipe sections (44, 46, 48) to at least one flexible lengthening piece (60) borne by the pod (36) and ended by the connection member (42).

7. Installation according to any one of the preceding claims, characterized in that it includes two articulated structures (14) mounted on the same base (12).

8. Installation according to any one of the preceding claims, characterized in that the fixed base (12) is a pole erected between two aircraft parking areas.

9. Installation according to any one of claims 1 to 7, characterized in that the fixed base (12) is a pillar to which a passenger platform is also joined.

10. Installation according to any one of claims 1 to 7, characterized in that the fixed base (12) is an extension of the air terminal.

11. Installation according to any one of the preceding claims, characterized in that the driving element includes two wheels (26) mounted on a common axle (28) and independent motors associated with each of the wheels, means for controlling these motors being mounted on the pod (36).

12. Installation according to any one of the preceding claims, characterized in that the pod (36) supports at least one adjustment valve mounted on the pipe (40) for distributing fuel, an indicator indicating the volume of fuel delivered and at least one alarm.

13. Installation according to any one of the preceding claims, characterized in that the connecting of the first extremity of the pipe (40) to the distribution system is effected in a caisson (62) placed on the ground immediately close to the fixed base and containing control, adjustment and fuel feed measuring means.

## Patentansprüche

1. Ortsfeste Kraftstoffbetankungsanlage für Flugzeuge aus einem Treibstoffversorgungs-Drucknetz,
**dadurch gekennzeichnet,**
daß sie umfaßt:
- eine ortsfeste, in der Nähe Wenigstens eines Flugzeugparkbereichs auf dem Boden errichtete Basis (12);
- wenigstens eine gelenkige Struktur (14), von der ein erstes Ende durch die ortsfeste Basis (12) getragen wird, schwenkbar um eine erste vertikale Achse (22), um sich horizontal ausbreiten bzw. entfalten zu können aus einem zusammengefalteten Ruhezustand in einen entfalteten Betankungszustand, der ein Durchfahren von Fahrzeugen unter der genannten Struktur zuläßt;
- ein Antriebselement (30), das wenigstens ein ausrichtbares Antriebsrad (26) umfaßt, durch das das zweite Ende der gelenkigen Struktur (14) auf dem Boden ruht;
- eine Gondel (36), so auf das zweite Ende der gelenkigen Struktur (14) montiert, daß sie sich zwischen einer unteren Ruhe- und Verschiebungsstellung und einer oberen Betankungsstellung bewegen kann; und
- eine Leitung (40), an der ortsfesten Basis (12) und jeder gelenkigen Struktur (14) angebracht, deren erstes Ende an das Versorgungsnetz angeschlossen ist, und deren zweites Ende, verbunden mit der Gondel (36), wenigstens eine Einrichtung (42) zum Anschließen an das Flugzeug trägt.

2. Anlage nach Anspruch 1, dadurch gekennzeichnet, daß die gelenkige Struktur (14) zwei steife, im wesentlichen gleich lange horizontale Teilstücke (16,18) umfaßt, gelenkig miteinander verbunden durch eine zweite vertikale Achse (20), nach Art eines Zirkels, wobei diese Teilstücke sich in einer Höhe befinden, die das Darunterdurchfahren von Fahrzeugen auf dem Boden zuläßt.

3. Anlage nach Anspruch 2, dadurch gekennzeichnet, daß das der zweiten vertikalen Achse (20) entgegengesetzte Ende eines ersten (16) der Teilstücke das erste Ende der Struktur bildet, während das der zweiten vertikalen Achse (20) entgegengesetzte zweite Teilstück (18) durch ein Gestell (24) nach unten verlängert ist, wobei dieses Gestell durch das um eine dritte vertikale Achse (34) ausrichtbare Antriebsrad (26) auf dem Boden ruht.

4. Anlage nach einem der Ansprüche 2 und 3, dadurch gekennzeichnet, daß in dem zusammengefalteten Ruhezustand der gelenkigen Struktur (14) die beiden Teilstücke (16,18) dem durch diese Struktur bedienten Parkbereich gebenüberstehen, bezogen auf die ortsfeste Basis (12).

5. Anlage nach einem der Ansprüche 2 bis 4, dadurch gekennzeichnet, daß die Leitung (40) drei steife Leitungsteilstücke (44,46,48), die die ortsfeste Basis und jedes der Teilstücke (16,18) der gelenkigen Struktur durchlaufen, und zwei Drehverbindungen (50,52) umfaßt, die diese Leitungsteilstücke miteinander verbinden, wobei diese Drehverbindungen zwei vertikale Achsen (22,20) definieren, die jeweils mit der ersten und der zweiten vertikalen Achse zusammenfallen.

6. Anlage nach Anspruch 5, dadurch gekennzeichnet, daß die Leitung (40) außerdem ein flexibles Leitungsteilstück (54) umfaßt, das die steifen Leitungsteilstücke (44,46,48) mit wenigstens einem Ansatz- bzw. Verlängerungsstück (60) verbindet, getragen durch die Gondel (36) und endend mit einer Kupplungs- bzw. Anschlußeinrichtung (42)

7. Anlage nach einem der vorangehenden Ansprüche, dadurch gekennzeichnet, daß sie zwei an dieselbe Basis (12) montierte gelenkige Strukturen (14) umfaßt.

8. Anlage nach einem der vorangehenden Ansprüche, dadurch gekennzeichnet, daß die ortsfeste Basis (12) eine zwischen zwei Flugzeugparkbereichen errichtete Säule ist.

9. Anlage nach einem der Ansprüche 1 bis 7, dadurch gekennzeichnet, daß die ortsfeste Basis (12) eine Stütze ist, auf der auch eine Passagierlaufbrücke angelenkt ist.

10. Anlage nach einem der Ansprüche 1 bis 7, dadurch gekennzeichnet, daß die ortsfeste Basis (10) eine Ausdehnung bzw. Erweiterung des Flughafens ist.

11. Anlage nach einem der vorangehenden Ansprüche, dadurch gekennzeichnet, daß das Antriebselement zwei auf ein gemeinsames Fahrgestell (28) montierte Räder (26) und für jedes der Räder einen unabhängigen Motor umfaßt, wobei Steuereinrichtungen dieser Motoren in der Gondel (36) angebracht sind.

12. Anlage nach einem der vorangehenden Ansprüche, dadurch gekennzeichnet, daß die Gondel (36) für die Verteilung des Treibstoffs wenigstens ein in die Rohrleitung (40) montiertes Einstellventil, wenigstens eine Not-Aus-Einrichtung dieser Verteilung, einen Mengenanzeiger des zugeteilten Treibstoffs und wenigstens eine Alarmeinrichtung umfaßt.

13. Anlage nach einem der vorangehenden Ansprüche, dadurch gekennzeichnet, daß der Anschluß des ersten Endes der Leitung (40) an dem Verteilungsnetz sich in einem auf dem Boden befindlichen Gehäuse (62) befindet, in unmittelbarer Nähe der ortsfesten Basis, und Kontroll-, Regel- und Meßeinrichtungen der Treibstoffversorgung enthält.
